# EUROPEAN PATENT SPECIFICATION

(11) **EP 1 312 825 B1**
(45) Date of publication and mention of the grant of the patent: **10.05.2006**
(21) Application number: 02257834.8
(22) Date of filing: 13.11.2002
(51) Int. Cl.: F16D 51/00, F16D 65/10, F16D 1/00, F16D 65/00

(54) **Drum brake backing plate**
Belagträgerplatte für Trommelbremse
Plaque de support de patins de freins pour freins à tambour

(30) Priority: 19.11.2001 US 988193
(43) Date of publication of application: 21.05.2003
(73) Proprietor: Akebono Corporation North America, Farmington Hills, MI 48331 (US)
(72) Inventor: Barbosa, Manuel, Novi, Michigan 48375 (US)
(74) Representative: Crouch, David John

(56) References cited:
- EP-A- 1 197 323
- DE-A- 4 203 173
- GB-A- 2 346 421
- US-A- 4 817 765
- PATENT ABSTRACTS OF JAPAN vol. 016, no. 036 (M-1205), 29 January 1992 (1992-01-29) & JP 03 244837 A (HONDA MOTOR CO LTD), 31 October 1991 (1991-10-31)
- PATENT ABSTRACTS OF JAPAN vol. 006, no. 246 (M-176), 4 December 1982 (1982-12-04) & JP 57 144319 A (AKEBONO BRAKE KOGYO KK), 6 September 1982 (1982-09-06)

## Description

### Field of the Invention

This invention relates to the art of drum brakes. In particular, the invention relates to improvements in drum brakes by the use of a backing plate structure that reduces noise and weight.

### Background Art

The structure of drum brakes is well known to include a structure that engages the vehicle axle and supports brake shoes. In a common arrangement, the drum brake structure includes a backing plate that bolts to the vehicle axle and supports the drum brake shoes. In this arrangement, the backing plate has substantial strength in order to resist the braking forces applied to the backing plate by the brake shoes. Because this backing plate must have substantial strength, it is often made of relatively thick steel and is, therefore, relatively heavy. For example, a typical backing plate is made of steel having a thickness of about 2.8mm with a steel abutment about 4mm thick secured to the backing plate. Such a backing plate weighs about 2.4 pounds.

Reduction of weight in automotive components is an important objective to achieve cost reduction and fuel efficiency, and components such as a backing plate have often been considered for improvement.

In addition, the manufacture of the typical brake system requires expensive tooling because of the large tonnage and numerous forming stations required to manufacture the typical backing plate.

Another characteristic of known backing plates is that vibrations of the brake shoes during application of braking forces induce vibrations in the backing plate. Because the backing plate is relatively large, it acts as a speaker amplifying the vibrations and generating substantial acoustical noise. Reduction of this noise is another important objective in the design of brake systems.

Prior systems have attempted to reduce the sound generated by the backing plate in a variety of ways. In one technique, one or more sound masses are attached to the backing plate at locations designed to disrupt harmonic vibrations. This technique, however, is expensive to implement and does not result in effective reductions of sound generation
German patent application No. DE 42 03 173 A1 describes an internal expanding drum brake for vehicles which comprises a brake bracket plate in two parts, with an outer peripheral collar, and brake shoes with supports.
Japanese patent application No. 02039097 describes a back plate for a drum brake which uses a damping steel sheet for the material of the back plate.
United Kingdom patent application No. 0001274.0 describes a drum brake backplate assembly which includes a backplate and a backplate damper which with a support member.
United States patent application No. 99, 632 describes a backing plate assembly for a drum brake which includes a first part adapted for attachment to a vehicle frame and a second part releasably coupled to the first part. The second part is made of a material that effects a substantial noise reduction in the assembly.

### SUMMARY OF THE INVENTION

The present invention is directed to a arum brate assembly having one features set out in the accompanying claim 1. Advantageous further features are set out in the subordinate claims 2 to 5. In accordance with the invention, a new design backing plate structure is provided that is lighter and dampens sounds to result in a lighter, less expensive, and quieter drum brake system. The new system employs a two-part structure wherein the first part is an aburment plate that is bolted to the axle and designed to resist the braking forces applied by the brake shoes. This abutment plate is strong and can be made of relatively thick material, but it represents only a small part of the overall structural area of the brake structure. The abutment plate is preferably large enough to attach to the vehicle axle and to provide one or more anchors for resisting movement of the brake shoes during braking. The abutment plate is preferably made of steel and 3mm-6mm thick. Preferably the thickness of the aburment plate is about 4mm.

The new backing plate structure also includes a shielding plate that is preferably separate from the abutment plate. Because the abutment plate is strong enough to accept the braking forces, the shielding plate itself can made thinner and, therefore, lighter than previous backing plates. In essence the shielding plate need only perform the function of shielding the brake components from entry of dirt and dust. In accordance with an important aspect of the invention, however, the shielding plate is also made of a sound and noise dampening material, preferably damped steel, to reduce the speaker effect of the backing plate and, therefore, reduce the sound emitted by the brake system. Thus not only does the new backing plate reduce weight, for example by more than 0.5 pounds, but it also effectively reduces the noise, vibration and harshness (NVH). Additionally, the backing plate of the invention is easier to manufacture, thus further reducing costs.

The shielding plate is preferably made of damped steel, which comprises two layers of steel with a sound-dampening layer between the steel layers. In the preferred construction, the layers of steel are of approximately equal thickness to provide the most efficient sound dampening effect. Of course, other constructions having improved sound attenuating characteristics may be found useful, and it will be understood that a variety of other constructions are possible because the abutment plate eliminates the requirement that the backing plate resist the braking forces. In the preferred embodiment, the damped steel has an overall thickness of 0.8mm-1.8mm and preferably about 1.2mm.

It is an object of the present invention to reduce the weight of drum brake assemblies.

It is a further object of the present invention to reduce NVH contributions from drum brake assemblies.

It is a still further object of the invention to provide an improved drum brake assembly of reduced cost.

### BRIEF DESCRIPTION OF THE DRAWINGS

Figure 1 is a front view of a backing plate structure in accordance with the invention.

Figure 2 is a vertical cross section of the structure of figure 1.

Figure 3 is an enlarged, partial cross section of the backing plate of figure 1.

### DETAILED DESCRIPTION OF THE PREFERRED EMBODIMENT

With reference to the drawing figures, a drum brake backing plate system 2 in accordance with the invention includes an abutment plate 4 and a shielding plate 6.

The abutment plate is made of a material that is strong enough to resist the braking forces applied to it by the brake shoes (not shown). For example, the abutment plate may be steel of approximately 4mm thickness or equivalent material. The abutment plate includes an upper portion that may be approximately square and measuring about 100 mm on each side. The upper portion includes holes 8 for securing the abutment plate to the axle housing (not shown) of a vehicle. A large opening 10 is provided for the axle (not shown). A lower portion of the abutment plate includes an abutment 12 configured to engage the ends of the brake shoes and accept braking forces. The lower portion forming the abutment 12 is connected to the upper portion by a mid-portion 14. It will be appreciated that geometric shapes other than those shown may be employed.

Further, the abutment plate may include a portion having a mounting hole (16) for receiving an antilock braking sensor (not shown). This allows the ABS to be mounted to rigid structure.

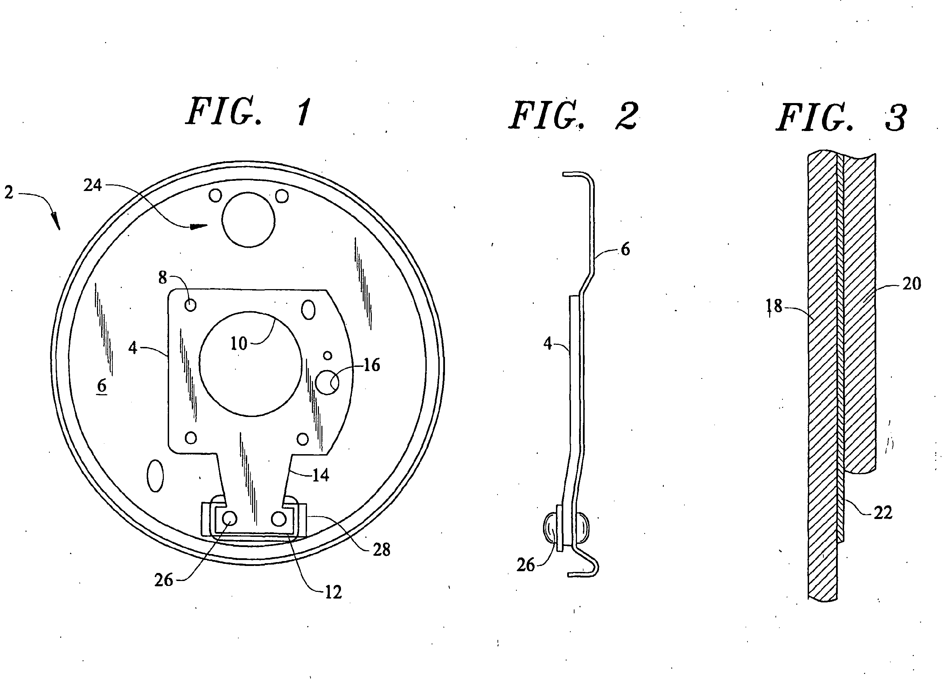

As noted above, the shielding plate 6 is preferably made of material that is much lighter than the material forming the abutment plate and is further a material having sound, or vibration, dampening characteristics. Such a material may be that which is known as damped steel and a preferred form of that is shown in more detail in figure 3. As illustrated there, the damped steel comprises a first layer 18 of steel, a second layer 20 of steel, and an intermediate layer 22 of vibration dampening material, such as a viscoelastic polymer.

The shielding plate 6 may also support those elements of the brake system that are compatible with the characteristics of the shielding plate. For example, the shielding plate may support a hydraulic cylinder (not shown) at mounting holes as generally designated at 24.

Damped steel by itself is a known structure and is commercially available. Further, the vibration dampening characteristics of damped steel has been investigated. Generally, it has been found that damped steel is more effective if the steel layers are of approximately equal thickness. Use of damped steel alone for the entire backing plate would not be practical because the requirement for strength would dictate a thickness for the one steel layer that would result in an overall thickness that is too large for optimum dampening performance to be achieved.

The lower part of the backing plate is attached to the lower part of the abutment plate in the embodiment shown by rivets 26 that extend through the backing plate, the abutment plate and washer plate 28. The bolts passing through holes 8 secure the upper part of the abutment plate and the central part of the shielding plate to each other. Clearly, other configurations maybe required for other brake designs.

It will be appreciated that a unique drum brake assembly backing plate of reduced weight and having improved NVH has been described. Modifications within the scope of the appended claims will be apparent to those of skill in the art.

## Claims

1. A drum brake assembly comprising a shielding plate (6) made of damped steel that dampens noise and vibrations, said shielding plate (6) being configured to support and shield brake components including drum brake shoes and a hydraulic cylinder for operating said drum brake shoes, said assembly further comprising an abutment plate (4) having a first part configured to be attached to an axle housing of a vehicle and a second part extending from said first part to engage ends of said brake shoes to resist braking forces applied thereto by said brake shoes during braking, whereby said abutment (4) and shielding (6) plates are made of different materials.

2. A drum brake assembly according to claim 1,
**characterised in that** said damped steel comprises first (18) and second (20) layers of steel of approximately equal thickness.

3. A drum brake assembly according to claim 1,
**characterised in that** said abutment plate (4) is made of steel.

4. A drum brake assembly according to claim 1,
**characterised in that** said abutment plate (4) is made of steel having a thickness of 3mm to 6mm.

5. A drum brake assembly according to claim 4,
**characterised in that** said damped steel has a thickness of 0.8mm to 1.8mm.

## Patentansprüche

1. Trommelbremsenanordnung, umfassend eine Abschirmplatte (6), hergestellt aus gedämpftem Stahl, die bzw. der Lärm und Vibrationen dämpft, wobei die Abschirmplatte (6) so ausgebildet ist, dass sie Bestandteile der Bremsen einschließlich der Trommelbremsbacken und eines hydraulischen Zylinders zum Betreiben der Trommelbremsbacken stützt und abschirmt, wobei die Anordnung weiterhin eine Anlageplatte (4) aufweist, die einen ersten Teil, der so ausgestaltet ist, dass er an einem Achsgehäuse eines Fahrzeugs angebracht werden kann, und einen zweiten Teil besitzt, der sich von dem genannten ersten Teil ausgehend so erstreckt, dass er an Enden der genannten Bremsbacken angreift, um Bremskräften, die durch die genannten Bremsbacken während des Bremsens darauf ausgeübt werden, standhalten zu können, worin die Anlage- (4) und die Abschirmplatte (6) aus unterschiedlichen Materialien hergestellt sind.

2. Trommelbremsenanordnung gemäß Anspruch 1, **dadurch gekennzeichnet, dass** der gedämpfte Stahl eine erste (18) und eine zweite (20) Schicht aus Stahl mit annähernd gleicher Dicke besitzt.

3. Trommelbremsenanordnung gemäß Anspruch 1, **dadurch gekennzeichnet, dass** die genannte Anlageplatte (4) aus Stahl hergestellt ist.

4. Trommelbremsenanordnung gemäß Anspruch 1, **dadurch gekennzeichnet, dass** die Anlageplatte (4) aus Stahl mit einer Dicke von 3mm bis 6mm hergestellt ist.

5. Trommelbremsenanordnung gemäß Anspruch 4, **dadurch gekennzeichnet, dass** der gedämpfte Stahl eine Dicke von 0,8mm bis 1,8mm aufweist.

## Revendications

1. Ensemble de frein à tambour comprenant une plaque de protection (6) en acier trempé qui amortit le bruit et les vibrations, ladite plaque de protection (6) étant configurée pour supporter et protéger les composants de freins, y compris les segments de freins à tambour et un cylindre hydraulique pour faire fonctionner lesdits segments de freins à tambour, ledit ensemble comprenant en plus une plaque de butée (4) ayant une première partie configurée pour être attachée à un corps de pont d'un véhicule et une deuxième partie s'étendant à partir de ladite première partie afin de s'engager dans les extrémités desdits segments de freins afin de résister aux forces de freinage qui lui sont appliquées par les segments de freins au cours du freinage, de sorte que lesdites plaques de butée (4) et de protection (6) sont constituées de matériaux différents.

2. Ensemble de frein à tambour selon la revendication 1, **caractérisé en ce que** ledit acier trempé comprend une première (18) et une deuxième (20) couche d'acier d'épaisseur approximativement égale.

3. Ensemble de frein à tambour selon la revendication 1, **caractérisé en ce que** ladite plaque de butée (4) est en acier.

4. Ensemble de frein à tambour selon la revendication 1, **caractérisé en ce que** ladite plaque de butée (4) est en acier présentant une épaisseur de 3 mm à 6 mm.

5. Ensemble de frein à tambour selon la revendication 1, **caractérisé en ce que** ledit acier trempé présente une épaisseur de 0,8 mm à 1,8 mm.
